# EUROPÄISCHE PATENTSCHRIFT

(11) **EP 3 551 893 B1**
(45) Veröffentlichungstag und Bekanntmachung des Hinweises auf die Patenterteilung: **05.06.2024**
(21) Anmeldenummer: 17818071.7
(22) Anmeldetag: 01.12.2017
(51) Int. Cl.: F16B 5/10, F16B 21/04

(54) **VERSCHLUSS-VORRICHTUNG ZUR ANBRINGUNG AN EINEN BESCHICHTUNGSROBOTER**
CLOSURE DEVICE FOR ATTACHING TO A COATING ROBOT
DISPOSITIF DE FERMETURE À MONTER SUR UN ROBOT DE REVÊTEMENT

(30) Priorität: 09.12.2016 DE 102016014660
(43) Veröffentlichungstag der Anmeldung: 16.10.2019
(73) Patentinhaber: Dürr Systems AG, 74321 Bietigheim-Bissingen (DE)
(72) Erfinder: HEZEL, Thomas, 71679 Asperg (DE); HAAS, Jürgen, 75438 Knittlingen (DE)
(74) Vertreter: v. Bezold & Partner Patentanwälte - PartG mbB
(86) Internationale Anmeldenummer: PCT/EP2017/081130
(87) Internationale Veröffentlichungsnummer: WO 2018/104161

(56) Entgegenhaltungen:
- EP-A1- 2 632 002
- WO-A1-2009/015162
- FR-A1- 2 818 252
- GB-A- 1 509 287
- GB-A- 2 257 461
- GB-A- 2 494 474
- US-A- 3 709 086
- US-A- 4 207 655
- US-A1- 2005 045 415

## Beschreibung

Die Erfindung betrifft einen Beschichtungsroboter mit einer an dem Roboter anbringbaren Verschluss-Vorrichtung, vorzugsweise einer Schnell-Verschluss-Vorrichtung, die zum überdruckdichten Verschließen eines Hohlraums des Roboters dient, bis zu mindestens 175, 200 oder 225 mbar. Der Roboter ist z. B. ein Lackier- oder Beschichtungsroboter.

Industrieroboter weisen in der Regel Roboter-Gehäuse oder Roboter-Arme mit Hohlräumen auf. Für eine optimale Steifigkeit und Gewichtsverteilung ist das meiste Material der Roboter-Gehäuse und Roboter-Arme so angeordnet, dass der Kräfte- und Momenten-Verlauf über eine äußere Tragstruktur genutzt wird.

Die Hohlräume sind in der Regel von außen zugänglich und werden teilweise zum Führen von Kabeln, zum Aufnehmen von Bauteilen (z. B. Motoren, Getriebe usw.) etc. genutzt.

Für Schweiß- oder Handlings-Roboter spielt es in der Regel eine untergeordnete Rolle, ob die Hohlräume zur Außenseite hin offen sind oder nicht.

Werden Roboter allerdings zum Beschichten, speziell zum Lackieren, eingesetzt, ist es vorteilhaft oder sogar zwingend erforderlich, dass die Hohlräume zur Außenseite hin verschlossen sind, z. B. aus Explosionsschutzgründen oder um darin angeordnete Kabel, Bauteile etc. vor Verschmutzung oder Verschleiß zu schützen. Insbesondere Farb-/Lacknebel, Overspray und anderer Schmutz stellen für Beschichtungs- und Lackier-Roboter große Probleme dar.

Eine große Herausforderung ist es, Roboter, insbesondere Lackierroboter, so zu entwickeln, dass landestypische Explosionsschutz-Anforderungen erfüllt werden. Da es im Lauf der Zeit immer wichtiger wurde, die Prozess- und Reaktionszeiten so schnell und präzise als möglich auszuführen, ist es wichtig, die hierzu erforderlichen Regelventile in Räumen so nah wie möglich zum Applikationsgerät zu positionieren. Ebenso können weitere erforderliche Bauteile, wie z. B. Antriebe, Motoren, Stecker, Klemmen usw., in den gleichen Räumen positioniert werden.

Diese Räume werden in der Regel durch Abdeckungen luftdicht verschlossen. Durch Erfahrung hat sich herausgestellt, dass landesspezifische Explosionsschutz-Zulassungen meist nur mit einer Überdruckkapselung oder zumindest mit einem luftdichten sowie Staub- und Sprühnebel-resistenten und auch flüssigkeitsdicht Hohlraum (insbesondere Roboter-Gehäuse) möglich sind.

Je besser die konstruktive Ausführung der Abdeckungen zur Abdeckung/Schließung der Hohlräume in Bezug auf die oben genannten erforderlichen Eigenschaften, desto besser ist eine Wartung durchführbar und desto geringer ist die Fehlerhäufigkeit.

In der Praxis werden Abdeckungen meist mit flexiblen Abdichtungen ausgestattet. Eine große Herausforderung bei der Erzeugung druckdichter Hohlräume ist, dass die Dichtungen beim Reinigen der Roboter durch Löse- oder Reinigungsmittel nicht angelöst werden oder aufquellen und Farbreste, die ggf. vorhanden sind, nicht in Spalte eintreten und die Dichtungen dadurch zusätzlich verkleben.

Folgende Normen / Anforderungen müssen in Bezug auf den Explosionsschutz mit Überdruckkapselung für Lackierroboter erfüllt werden. Es wird teilweise zwischen verschiedenen Betriebs-Phasen unterschieden:
- Spülphase mit Überdruck zum Freispülen von explosionsfähigem Gemisch vor dem Betrieb
- Betriebsphase mit leichtem Überdruck
- Im Kompensationsbetrieb bei kleinen Leckagen wird der erforderliche Überdruck durch Ausregeln mit einer Luftregelung und elektronischer Drucküberwachung kompensiert. Je nach Lacksystem und Anforderung sind z. B. nach ATEX-Richtlinie 94 und/oder 95 EG weitere verschiedene Normen zu beachten. Teilweise ist eine Redundanz erforderlich.

Alle Anforderungen für den europäischen Betrieb sind durch die Norm DIN EN 60079-2 (Geräteschutz durch Überdruckkapselung "p") geregelt.

Je nach Anforderung und Schutzgrad herrscht während der Spülphase ein Überdruck von bis zu 40 mbar, da der Roboter schnell gespült werden soll und ein gewisser Staudruck durch den Luftauslass mit integriertem Rückschlagventil entsteht. Ein Ziel ist es beispielsweise, einen Roboter mit einem Luftvolumen von 200 Liter Inhalt und verschiedenen verzweigten Luftbereichen in weniger als 3 Minuten mit Luft oder interten Gas durchzuspülen.

Zum Erhalt des Schutzes im Betrieb muss je nach Einteilung in der speziellen Gerätegruppe beispielsweise beim vereinfachten System "2py" 50 Pa und beim System "pz" 25 Pa dauerhaft vorhanden sein (Jeweils Kapitel 7.1 in der o.g. Norm).

Für den amerikanischen Explosionsschutz liegen die Druck-Anforderungen und die Anforderungen an die Dichtheit noch höher.

Die amerikanische Vorschrift der standard fire protection association NFPA 496 - STANDARD FOR PURGED AND PRESSURIZED ENCLOSURES FOR ELECTRICAL EQUIPMENT - schreibt ähnlich der Europäischen Norm eine 5-fache Überdrucksicherheit in Bezug auf den gewählten oder konstruktiv vorgesehenen max. Druck vor. Die Leckage-Rate darf bei dieser Überdruckprüfung zudem einen gewissen Wert nicht überschreiten

Verschiedene andere Normen schreiben folgende weitere Anforderungen vor:
Die DIN EN 60079-0 Abschnitt 20 schreibt z. B. für Abdeckungen von Überdruck-gekapselten Systemen wie beispielsweise Lackierrobotern mit Überdruckkapselung folgendes vor: Das Öffnen von Gehäusen (und Abdeckungen) muss durch den Zwang der Verwendung eines entsprechenden Werkzeuges (z.B. Innensechskantschraube oder Torxschraube) verhindert werden
Die EN 13463-5 - Nicht-elektrische Geräte für den Einsatz in explosionsgefährdeten Bereichen, Teil 5 -: Schutz durch Konstruktive Sicherheit "c" schreibt zum Beispiel eine Fallprüfung mit einem entsprechenden Prüfwerkzeug vor.

Ähnliche Anforderungen gelten in der oben genannten amerikanischen Verordnung NFPA 496 sowie der NFPA 33.

Herausforderungen in Bezug auf die Abdeckungen und deren Montage am Roboter bestehen in erster Linie darin, die oben genannten Normen und deren Bedingungen einzuhalten.

Die Anforderungen sind insbesondere:
A. Abdeckungen zumindest an einem Punkt nur mit einem Werkzeug zu öffnen
B. Hohlräume druckdicht bis zu einem Überdruck von min. 200 mbar ohne nennenswerte Leckage
C. Abdeckung und Dichtungsqualität lebensdauerfest oder Dichtung über einen definierten Zeitraum Alterungs-resistent, siehe NFPA 496
D. Alle Bauteile wie auch Abdeckungen, Verschlüsse usw. müssen einer Fallprüfung mit einem definierten Prüfkörper aus 1 m aushalten, siehe ATEX-Richtlinie

Weitere Ziele oder spezifische Anforderungen aus verschiedenen Erfahrungen in Bezug auf Lackierroboter sind insbesondere :
E. Dichtungen lösemittelfest und zusätzlich von außen geschützt, so dass keine Farbreste die Dichtung erreichen und/oder verkleben
F. Dichtungen in einer Abdeckungsnut fixiert, jedoch einfach austauschbar
G. Eindeutiger und definierter Verschluss- und Entriegelungsvorgang der Abdeckungen
H. Entriegelung und Abnahme von Abdeckelementen, die Zugang für eine schnelle Wartung erfordern, unter 30 Sekunden durch eine Person
I. Reduzierung der Verschlüsse je Abdeckung
J. Öffnungs- und Schließbewegung für Abdeckungen mit einer Hand durchführbar
K. Öffnungs- und Schließbewegung schnell durchführbar
L. An der Stellung des Verschlusses optisch erkennbar, ob der Verschluss offen oder geschlossen ist.
M. Verschlusssystem austauschbar
N. Notentriegelung durch Hilfswerkzeug, falls das Öffnungsmerkmal durch falschen Gebrauch oder Verschleiß unbrauchbar ist.

In der Praxis werden Abdeckungen üblicherweise mit Schrauben an die Roboter montiert. In Abhängigkeit der Größe der Abdeckungen werden meist bis zu 20 oder sogar mehr als 20 Schrauben verwendet. Eine Abdeckung muss in Abhängigkeit der Größe meist mit 2 Händen gehalten werden, wobei eine zweite Bedienperson versucht, die Schrauben in verschiedenen Schritten nacheinander einzuschrauben. Dabei ist zu beachten, dass alle Schrauben jeweils am zugehörigen Gewinde ansetzen müssen. Da das Gewinde meist nicht sichtbar ist, wird von der Bedienperson eine gewisse Übung, Geschicklichkeit und Erfahrung abverlangt. Die Schrauben werden in der Regel zunächst nur provisorisch angezogen. In der Folge werden dann alle Schrauben meist mit einem Nennmoment nacheinander angezogen und nochmals kontrolliert. Wird z. B. ein Gewinde beim Anziehen der Schraube beschädigt, so muss das beschädigte Gewinde ersetzt oder repariert werden, wenn überhaupt möglich.

Der Schrauben-basierte Montagevorgang benötigt nicht nur viel Zeit und oftmals zwei Bedienpersonen, sondern erfordert auch eine gewisse Übung, Erfahrung und Geschicklichkeit.

In der Praxis sind Dichtungen, insbesondere Flachdichtungen, für die Abdeckungen oftmals aufgeklebt, um ein Verrutschen beim Anziehen der Schrauben zu verhindern. Die Auflagefläche für die Flachdichtung ist meist relativ klein. Die Dichtung wird im Bereich der Schrauben durch die Schraubenlöcher geschwächt. Löcher für die Schrauben sind in der Regel frei gestanzt und durchdringen die Dichtungen. Ist die Dichtung leicht verschlissen, so treten in der Regel Leckagen im Bereich der Schrauben auf. Einige Flachdichtungen altern oft durch zu große Pressung in Folge falscher Deckelmontage und gleichzeitig durch Kontakt im Randbereich durch Lösemittel und UV-Einwirkung.

Verschluss-Vorrichtungen für unterschiedliche Zwecke, allerdings nicht zum Verschließen eines Hohlraums eines Beschichtungsroboters, sind u. a. bekannt aus GB 2 257 461 A, WO 2009/015162 A sowie FR 2 818 252 A.

CN 202684913 U offenbart einen Beschichtungsroboter mit einem Überdrucksensor, der explosionsschutzsicher in der Roboterbasis angeordnet ist.

Eine Aufgabe der Erfindung ist es, eine Verschluss-Vorrichtung zur Anbringung an einen Roboter zu schaffen, die eine einfache, schnelle und sichere, insbesondere druckdichte, Abdeckung und insbesondere Abdichtung eines Hohlraums eines Roboters ermöglicht. Darüber hinaus sollen z. B. zumindest eine, aber vorzugsweise alle genannten Kriterien A bis N erfüllt werden können.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung betrifft eine Verschluss-Vorrichtung zur Anbringung an einen Roboter, vorzugsweise zum überdruckdichten Verschließen eines Hohlraums des Roboters bis zu einem Überdruck von mindestens 175mbar, 200mbar oder 225mbar, zweckmäßig ohne nennenswerte Leckage, insbesondere bis mindestens zum 5-fachen des Spüldruckes.

Die Verschluss-Vorrichtung ist vorzugsweise als Schnell-Verschluss-Vorrichtung ausgeführt.

Der Roboter ist ein Beschichtungsroboter sein.

Die Verschluss-Vorrichtung umfasst ein zweckmäßig demontierbares Abdeckelement (z. B. Deckel und/oder Gehäuseplatte) zum Abdecken eines Hohlraums des Roboters (z. B. eines Gehäuses oder Arms des Roboters) und eine Befestigungseinrichtung zur Befestigung des Abdeckelements an dem Roboter. Die Befestigungseinrichtung umfasst ein drehbares Verschlusselement (z. B. Verschlussbolzen). Die Befestigungseinrichtung kann vorzugsweise auch eine Verschlussbuchse für das Verschlusselement umfassen.

Die Befestigungseinrichtung zeichnet sich insbesondere dadurch aus, dass sie eine Dreh-Schließbewegung zwischen 45° und 215° aufweist und somit durch eine Dreh-Schließbewegung zwischen 45° und 215° in eine vorzugsweise einrastbare und/oder reibungsfixierbare Verschlussstellung gebracht werden kann.

Die Befestigungseinrichtung ermöglicht hierdurch insbesondere die Realisierung einer sicher schließenden Schnell-Verschluss-Vorrichtung.

Es ist möglich, dass die Befestigungseinrichtung eine Dreh-Schließbewegung zwischen 60° und 120°, vorzugsweise 80° und 100°, aufweist und somit durch eine Dreh-Schließbewegung zwischen 60° und 120°, vorzugsweise 80° und 100°, in eine Verschlussstellung gebracht werden kann.

Das Verschlusselement weist zumindest eine Nase auf, wobei die zumindest eine Nase zusammen mit dem Verschlusselement drehbar ist. Die zumindest eine Nase dient zur Befestigung in der Verschlussbuchse der Befestigungseinrichtung. Ergänzend kann die zumindest eine Nase vorzugsweise zur Vorzentrierung des Verschlusselements insbesondere mittels Formgestalt dienen. Durch die zumindest eine Nase kann also ermöglicht werden, dass das Verschlusselement durch Formgestalt die jeweils richtige Ausrichtung relativ zur Verschlussbuchse mit Hilfe einer Vorzentrierung selbst finden kann.

Es ist möglich, dass das Verschlusselement einen ersten Anlagering und/oder einen zweiten Anlagering aufweist, zwischen denen das Abdeckelement angeordnet werden kann. Der erste und/oder zweite Anlagering kann z. B. im Wesentlichen kreisringförmig, im Wesentlichen quadrat- oder rechteckförmig sein etc. und wahlweise z. B. in Umfangsrichtung geschlossen oder offen oder geschlitzt ("Schlitzring") ausgebildet sein.

Die Befestigungseinrichtung weist eine Verschlussbuchse zur abschnittsweisen Aufnahme und Befestigung des Verschlusselements auf.

Die Verschlussbuche ist vorzugsweise an oder in dem Roboter montierbar, zweckmäßig roboterfest, aber vorzugsweise austauschbar.

Die Verschlussbuchse kann insbesondere zumindest eine Steigungskonstruktion (z. B. Rampenkonstruktion) für die zuminddest eine Nase aufweisen, um einen Schließhub des Verschlusselements zu erzeugen.

Im Rahmen der Erfindung ist insbesondere eine einrastbare und/oder reibungsfixierbare Verschlussstellung möglich.

Die zumindest eine Steigungskonstruktion kann z. B. zu einer Arretiervertiefung (z. B. eine Einrastvertiefung) zum Arretieren (z. B. Einrasten) der zumindest einen Nase führen. Alternativ oder ergänzend kann z. B. ein Arretieren der zumindest einen Nase in der Verschlussbuchse durch Reibung erzielt werden.

Es ist möglich, dass die zumindest eine Steigungskonstruktion eine Steigung hin zu einem Hoch- oder Wendepunkt (z. B. Knickpunkt) aufweist. Die zumindest eine Steigungskonstruktion kann z. B. in Schließ-Drehrichtung des Verschlusselements hinter dem Hoch- oder Wendepunkt einen Teilabschnitt mit reduzierter oder negativer Steigung aufweisen.

Die zumindest eine Steigungskonstruktion kann z. B. zumindest eine Diskontinuität (z. B. einen Hoch-, Tief- und/oder Wendepunkt und alternativ oder ergänzend eine Steigungszunahme und/oder Steigungsabnahme) aufweisen, welche beim Passieren der zumindest einen Nase für eine Bedienperson haptisch spürbar ist. Dadurch kann z.B. ermöglicht werden, dass der Bedienperson ein Erreichen der Verschlussstellung (z. B. ein Einrasten) und/oder der Fortschritt des Schließvorgangs während der Drehung des Verschlusselements haptisch spürbar vermittelt werden kann.

Die zumindest eine Steigungskonstruktion kann vorzugsweise zumindest zwei Diskontinuitäten aufweisen.

Die zumindest zwei Diskontinuitäten können z. B. durch den Hoch- oder Wendepunkt und einen zusätzlichen Wendepunkt (z. B. Knickpunkt) in Schließ-Drehrichtung des Verschlusselements hinter dem Teilbereich und/oder in Schließ-Drehrichtung des Verschlusselements vor der Arretiervertiefung ausgebildet werden.

Besonders bevorzugt ist, dass für eine Bedienperson ein Erreichen der Verschlussstellung durch ein Einrasten der zumindest einen Nase und/oder einen Anschlag für die zumindest eine Nase haptisch spürbar ist.

Die Arretiervertiefung kann in Schließ-Drehrichtung des Verschlusselements vorzugsweise hinter dem Hoch- oder Wendepunkt, hinter dem Teilabschnitt und/oder hinter dem zusätzlichen Wendepunkt ausgebildet sein.

Die Verschlussbuchse kann zumindest einen Anschlag für die zumindest eine Nase aufweisen, insbesondere zur Begrenzung der Schließ-Drehbewegung des Verschlusselements. Der Anschlag begrenzt vorzugsweise in Schließ-Drehrichtung des Verschlusselements die zumindest eine Steigungskonstruktion.

Die Verschlussbuchse kann zumindest eine Zentrieröffnung für die zumindest eine Nase umfassen, zur Vorzentrierung des Verschlusselements. Zu diesem Zweck kann eine Einlassöffnung der Verschlussbuchse mittels der zumindest einen Zentrieröffnung unrund und/oder rotationsunsymmetrisch ausgeformt sein.

Die Befestigungseinrichtung kann z. B. ein Beaufschlagungselement zur Erzeugung einer ergänzenden Druckkraft in Richtung des Abdeckelements und somit insbesondere in Richtung des Roboters umfassen. Das Beaufschlagungselement dient somit vorzugsweise als Schließkraftverstärker sowie als Ausgleichselement um den minimal verringerten Hub nach dem "überschreiten" des oben in Zeile 28 und 30 beschriebenen Wendepunkts auszugleichen

Das Beaufschlagungselement kann z. B. eine Feder, eine Spiralfeder, eine Tellerfeder und/oder ein elastisch verformbares Kunststoffbauteil umfassen.

Es ist möglich, dass zwei Nasen, zwei Steigungskonstruktionen und/oder zwei Zentrieröffnungen vorgesehen sind, die vorzugsweise jeweils in entgegengesetzte Richtungen orientiert sind, z. B. um im Wesentlichen 180° versetzt.

Die Verschluss-Vorrichtung kann eine z.B. elastische Dichtung zur Anordnung zwischen dem Abdeckelement und dem Roboter (z. B. Robotergehäuse, Roboterarm usw.) umfassen und die Dichtung kann mittels der Befestigungseinrichtung gepresst werden.

Die Dichtung ist vorzugsweise eine Kunststoffdichtung, z. B. aus einem elastischen Material.

Es ist möglich, dass die Dichtung eine Luftkammerdichtung ist, zumindest eine Dichtlippe aufweist und/oder in einer Nut verläuft. Die Nut kann im Abdeckelement und/oder im Roboter ausgebildet sein.

Das Verschlusselement und/oder die Verschlussbuchse kann zur Erzielung der Verschlussstellung vorzugsweise gewindefrei ausgeführt sein.

Die Dichtung kann z. B. von der Befestigungseinrichtung in einem Abstand angeordnet sein und/oder gegenüber der Außenseite des Roboters durch das Abdeckelement abgeschirmt sein.

Es ist möglich, dass das Verschlusselement einen Kopfabschnitt mit einer Werkzeugeingriffsstruktur (z. B. 3-Kant, 4-Kant, 5-Kant oder 6-Kant oder andere geeignete Formen) aufweist.

Es ist möglich, dass das Verschlusselement einen Schaftabschnitt aufweist, wobei die zumindest eine Nase von dem Schaftabschnitt absteht, der erste Anlagering und/oder der zweite Anlagering um den Schaftabschnitt herum angeordnet ist, und/oder das Beaufschlagungselement um den Schaftabschnitt herum angeordnet ist.

Die Befestigungseinrichtung kann z. B. einen Indikator aufweisen, an dessen Stellung optisch erkennbar ist, ob die Befestigungseinrichtung in Schließstellung ist oder nicht.

Die Verschluss-Vorrichtung ist vorzugsweise zur Bildung einer Überdruckkapselung ausgeführt. Das Abdeckelement dient insbesondere zum Abdecken eines Hohlraums des Roboters, z. B. zur Abdeckung und/oder zum Verschluss eines Roboterarms oder Robotergehäuses.

Zu erwähnen ist, dass die zumindest eine Diskontinuität, der Hochpunkt und/oder der Wendepunkt vorzugsweise knick- oder schwellenförmig ausgebildet sein kann, z. B. um für eine Bedienperson als im Wesentlichen abrupter Übergang haptisch gespürt zu werden. Allerdings kann die zumindest eine Diskontinuität, der Hochpunkt und/oder der Wendepunkt auch zweckmäßig durch eine Steigungszunahme und/oder Steigungsabnahme realisiert werden, z. B. um für die Bedienperson als im Wesentlichen "smoother" (z. B. gleichmäßiger, geschmeidiger, gekrümmter und/oder nicht knickförmiger) Übergang haptisch gespürt werden zu können.

Die Befestigungseinrichtung ist vorzugsweise durch eine Dreh-Schließbewegung im Uhrzeigersinn schließbar und durch eine Dreh-Öffnungsbewegung im Gegenuhrzeigersinn öffenbar, wobei auch die umgekehrte Variante möglich ist.

Der Hohlraum kann z. B. Teil einer Überdruckkapselung sein.

Die Erfindung umfasst auch einen Roboter, vorzugsweise einen Lackier- oder Beschichtungsroboter, mit zumindest einer Verschluss-Vorrichtung wie hierin offenbart.

Es ist möglich, dass die Verschluss-Vorrichtung mit dem Abdeckelement zur Abdeckung und zum druckdichten Verschluss eines Roboterarms oder Robotergehäuses dient, so dass hierdurch z. B. eine Überdruckkapselung ausgebildet werden kann.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt einen Roboter mit einer VerschlussVorrichtung gemäß einer Ausführungsform der Erfindung,
- Figur 2: zeigt den Roboter der Figur 1 mit abmontiertem Abdeckelement,
- Figur 3: zeigt eine perspektivische Ansicht des Abdeckelements der Figur 1,
- Figur 4: zeigt eine Seitenansicht eines Verschlusselements einer Verschluss-Vorrichtung gemäß einer Ausführungsform der Erfindung,
- Figur 5: zeigt eine perspektivische Ansicht des Verschlusselements,
- Figur 6: zeigt eine perspektivische Ansicht einer Verschlussbuchse der Verschluss-Vorrichtung gemäß einer Ausführungsform der Erfindung,
- Figur 7: zeigt eine Seitenansicht der Verschlussbuchse,
- Figur 8: zeigt eine Draufsicht auf die Verschlussbuchse,
- Figur 9: zeigt eine andere perspektivische Ansicht der Verschlussbuchse,
- Figur 10: zeigt eine Schnittansicht der Verschlussbuchse,
- Figur 11: zeigt eine perspektivische Schnittansicht der Verschlussbuchse,
- Figur 12: zeigt eine andere perspektivische Schnittansicht der Verschlussbuchse,
- Figur 13: zeigt eine Schnittansicht des Verschlusselements,
- Figur 14: zeigt eine Schnittansicht der Verschlussbuchse, und
- Figur 15: zeigt eine Schnittansicht einer VerschlussVorrichtung gemäß einer Ausführungsform der Erfindung in einem montierten Zustand.

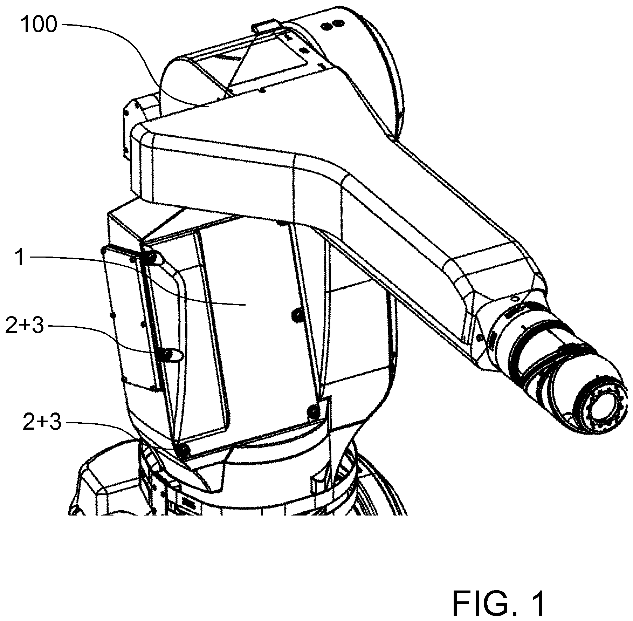

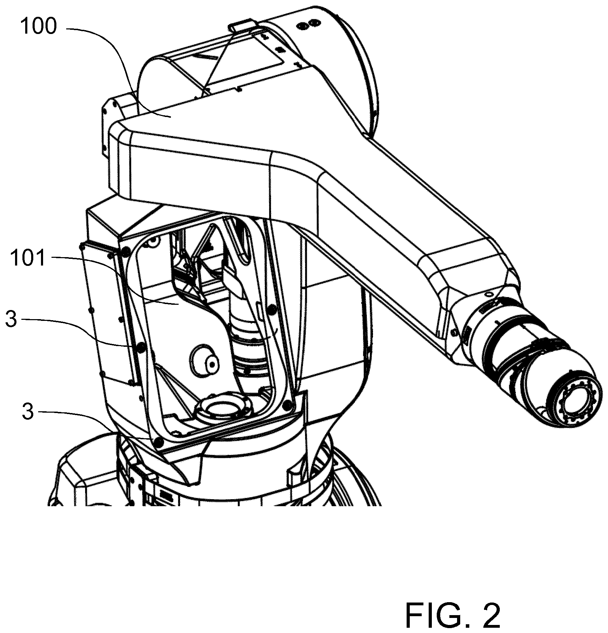

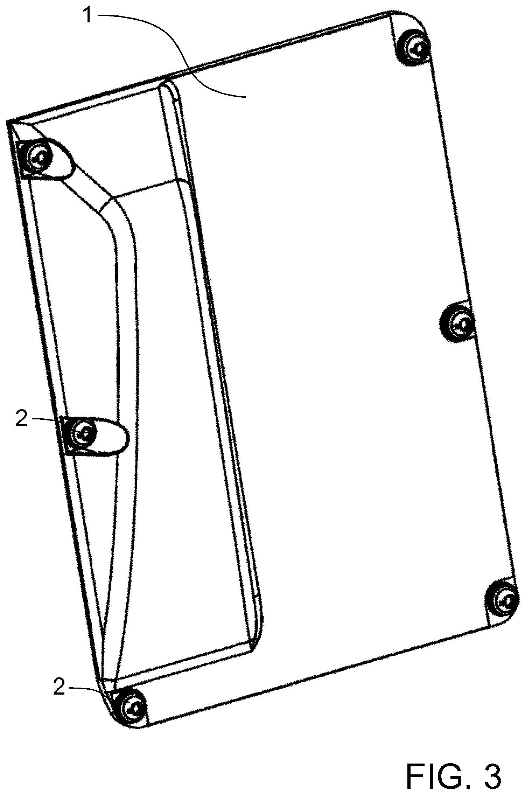

Figur 1 zeigt eine perspektivische Ansicht eines Roboters 100, insbesondere eines Lackier- oder Beschichtungsroboters 100, mit einer Verschluss-Vorrichtung gemäß einer Ausführungsform der Erfindung und mit an dem Roboter 100 anmontiertem Abdeckelement 1. Figur 2 zeigt den Roboter 100 mit abmontiertem Abdeckelement 1, wobei Figur 3 eine perspektivische Ansicht des Abdeckelements 1 zeigt. Die Verschluss-Vorrichtung wird nachfolgend unter gemeinsamer Bezugnahme auf die Figuren 1 bis 3 beschrieben.

Die Verschluss-Vorrichtung ist als Schnell-Verschluss-Vorrichtung ausgeführt und dient insbesondere zur bis zu mindestens 200mbar überdruckdichten Abdichtung und Abdeckung eines Hohlraums 101 des Roboters 100 (z. B. ein Robotergehäuse oder ein Roboterarm) . Das Abdeckelement 1 ist mittels sechs Befestigungseinrichtungen 2, 3 an dem Roboter 100 befestigt. Zu Klarheitszwecken sind in den Figur 1 bis 3 nur jeweils zwei Befestigungseinrichtungen mit Bezugszeichen versehen.

Die Befestigungseinrichtung 2, 3 umfasst ein drehbares Verschlusselement (Verschlussbolzen) 2 und eine am oder im Roboter 100 montierte Verschlussbuchse 3 für das Verschlusselement 2, insbesondere zur abschnittsweisen Aufnahme und Befestigung des Verschlusselements 2.

Die Befestigungseinrichtung 2, 3 weist eine Dreh-Schließbewegung von im Wesentlichen 90° auf, so dass sie durch eine Dreh-Schließbewegung von im Wesentlichen 90° in eine Verschlussstellung gebracht werden kann. Im Rahmen der Erfindung sind allerdings auch größere und kleinere Dreh-Schließbewegungen möglich. Eine Dreh-Schließbewegung von im Wesentlichen 90° kann z. B. einen Schließhub von ungefähr 3mm erzeugen.

Der Montagevorgang des Abdeckelements 1 erfolgt im Wesentlichen wie folgt: Das Abdeckelement 1 wird von einer Bedienperson (Werker) mit zwei Händen auf dem Roboter 100, insbesondere einem Gehäuse oder Roboterarm des Roboters 100, angesetzt. Die Bedienperson hält dann das Abdeckelement 1 mit einer Hand am Roboter 100 und schließt dann nach und nach die sechs Verschlusselemente 2 mit der anderen Hand mit einer ca. 90°-Umdrehung. Der gesamte Schließvorgang kann unter 30 Sekunden realisiert werden.

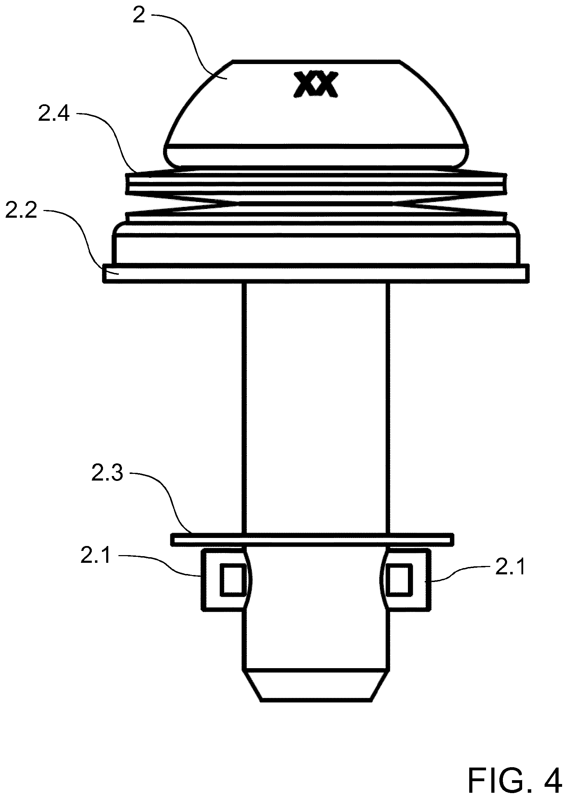

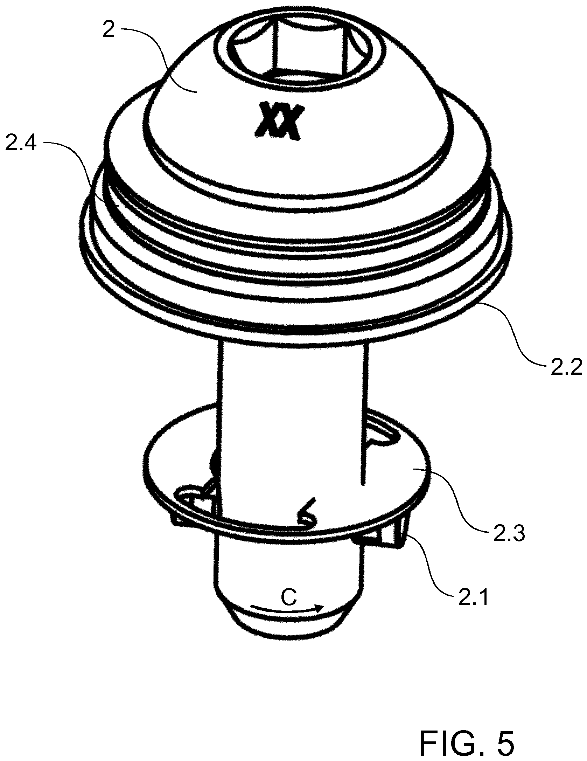

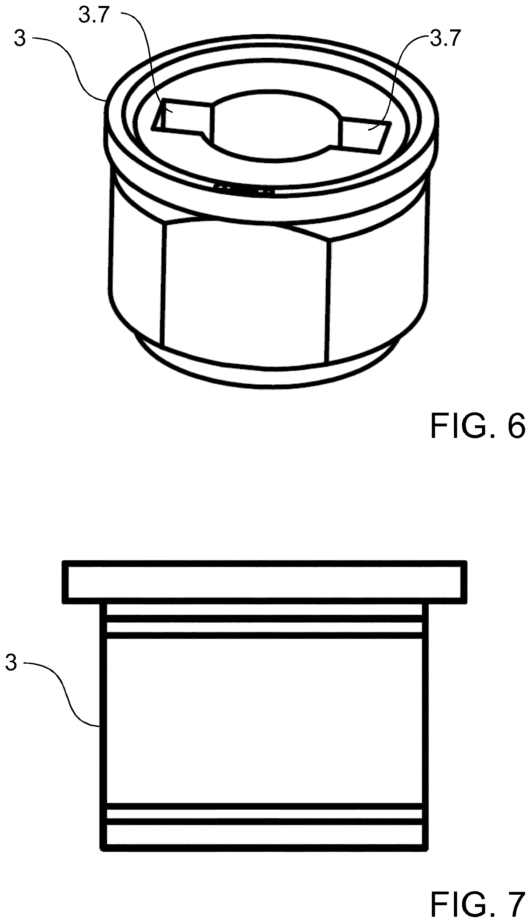

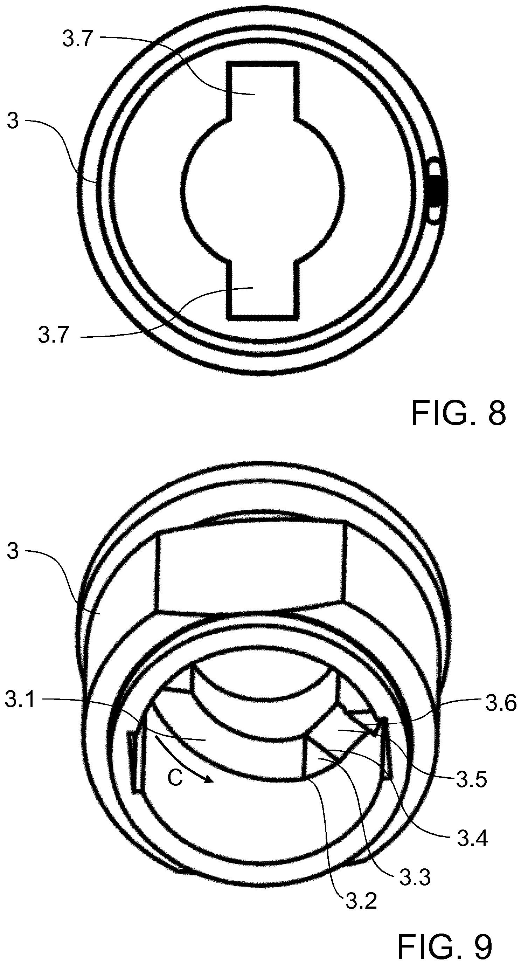

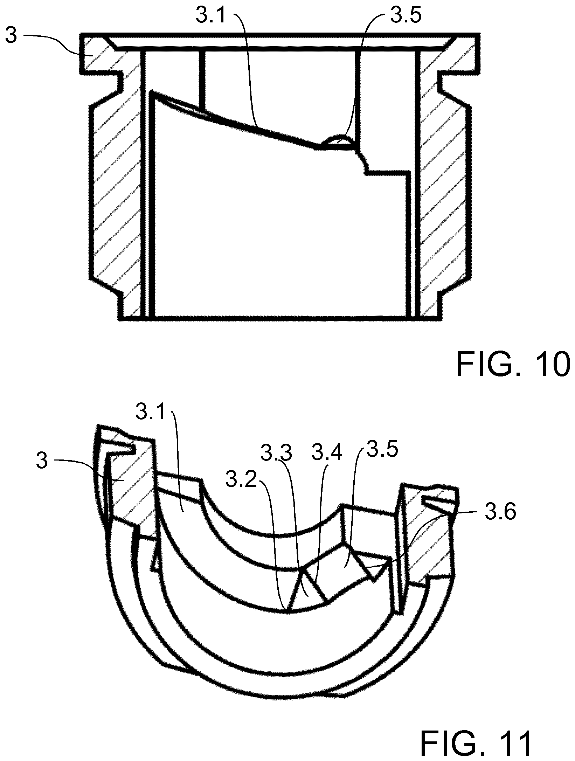

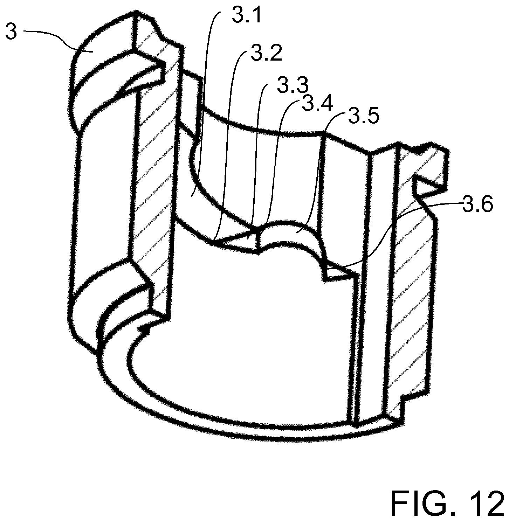

Die Figuren 4 und 5 zeigen verschiedene Ansichten des Verschlusselements 2. Die Figuren 6 bis 12 zeigen verschiedene Ansichten der Verschlussbuchse 3. Das Verschlusselement 2 und die Verschlussbuchse 3 werden nachfolgend unter gemeinsamer Bezugnahme auf die Figuren 4 bis 12 beschrieben, wobei in den Figuren 4 bis 12 teilweise zu Klarheitszwecken nicht alle Teile mit Bezugszeichen versehen sind.

Das Verschlusselement 2 umfasst (in Figur 4 und 5 oben) einen Kopfabschnitt mit Werkzeugeingriffsstruktur (z. B. Innen-6-Kant) und (in Figur 4 und 5 darunter) einen Schaftabschnitt.

Zwei Nasen 2.1 stehen von dem Verschlusselement 2 ab, sind zusammen mit dem Verschlusselement 2 drehbar und dienen zur einrast- und/oder reibungsfixierten Befestigung in der Verschlussbuchse 3.

Das Verschlusselement 2 ist mit einem ersten Anlagering 2.2 und einem zweiten Anlagering 2.3 versehen, zwischen denen das Abdeckelement 1 angeordnet wird. Der erste Anlagering 2.2 kann zweckmäßig separat zum Kopfabschnitt oder als Teil des Kopfabschnitts ausgeführt sein.

Ein um den Schaftabschnitt herum angeordnetes Beaufschlagungselement 2.4 dient zur Erzeugung einer Druckkraft in Richtung des Abdeckelements 1. Außerdem kann ein Axial-Hub durch das Beaufschlagungselement 2.4 z. B. in Bezug auf Toleranzen ausgeglichen werden. Das Beaufschlagungselement 2.4 ist vorzugsweise eine Feder, z. B. eine Spiral- oder Tellerfeder, kann aber auch ein elastisch verformbares Kunststoffbauteil sein.

Die Verschlussbuchse 3 umfasst zwei Steigungskonstruktionen 3.1 für die zwei Nasen 2.1, wodurch ein Schließhub des Verschlusselements 2 erzeugbar ist.

Die zwei Steigungskonstruktionen 3.1 sind im Wesentlichen baugleich ausgeführt, allerdings um im Wesentlichen 180° versetzt, so dass nachfolgend nur eine Steigungskonstruktion 3.1 beschrieben wird.

Die Steigungskonstruktion 3.1 mündet in einer Arretiervertiefung 3.5 zum Arretieren, insbesondere Einrasten, der Nase 2.1, wobei alternativ oder ergänzend ebenfalls ein Arretieren der Nase 2.1 durch Reibung möglich ist.

Die Steigungskonstruktion 3.1 umfasst zunächst eine Steigung hin zu einem Hoch-/Wendepunkt 3.2.

In Schließ-Drehrichtung C des Verschlusselements 2 hinter dem Hoch-/Wendepunkt 3.2 ist ein Teilabschnitt 3.3 mit negativer Steigung ausgebildet.

In Schließ-Drehrichtung C des Verschlusselements 2 hinter dem Teilabschnitt 3.3 ist ein weiterer Wendepunkt 3.4 ausgebildet.

In Schließ-Drehrichtung C des Verschlusselements 2 hinter dem weiteren Wendepunkt 3.4 ist die Arretiervertiefung 3.5 ausgebildet.

In Schließ-Drehrichtung C des Verschlusselements 2 hinter der Arretiervertiefung 3.5 ist ein Anschlag 3.6 für die Nase 2.1 ausgebildet und zwar zur Begrenzung der Schließ-Drehbewegung des Verschlusselements 2.

Die Steigungskonstruktion 3.1 umfasst durch den Hoch-/Wendepunkt 3.2 und den weiteren Wendepunkt 3.4 zwei Diskontinuitäten. Die zwei Diskontinuitäten 3.2 und 3.4 sind beim Passieren durch die Nase 2.1 während einer Drehbewegung des Verschlusselements 2 für eine Bedienperson haptisch spürbar. Dadurch kann der Bedienperson der Fortschritt des Schließvorgangs während der Drehung des Verschlusselements 2 haptisch vermittelt werden, insbesondere das Erreichen der Verschlussstellung, also insbesondere das Einrasten der Nase 2.1 in der Arretiervertiefung 3.5.

Die Diskontinuitäten 3.2 und 3.4 sind durch die Bedienperson als im Wesentlichen abrupte Übergange haptisch spürbar, wobei im Rahmen der Erfindung auch "smoothe" Übergänge möglich sind, z. B. durch eine gleichmäßige oder kontinuierliche Steigungszunahme oder Steigungsabnahme der Steigungskonstruktion 3.1.

Die zwei Nasen 2.1 dienen zugleich zur Vorzentrierung des Verschlusselements 2 durch Formgestalt, wobei hierzu die Verschlussbuchse 3 zwei Zentrieröffnungen 3.7 aufweist.

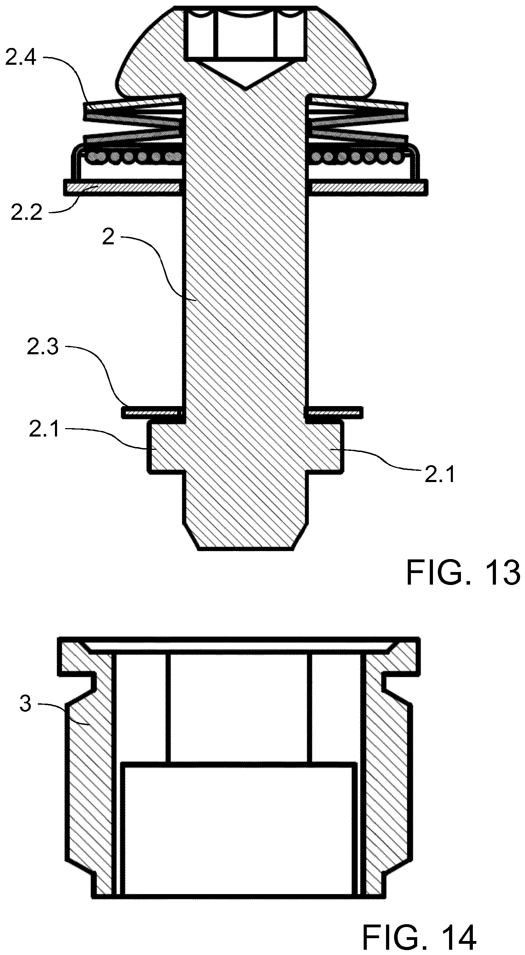

Die Figuren 13 und 14 zeigen Schnittansichten des Verschlusselements 2 und der Verschlussbuchse 3, wobei zur Erläuterung und zur Vermeidung von Wiederholungen auf die bereits erfolgte Beschreibung verwiesen wird.

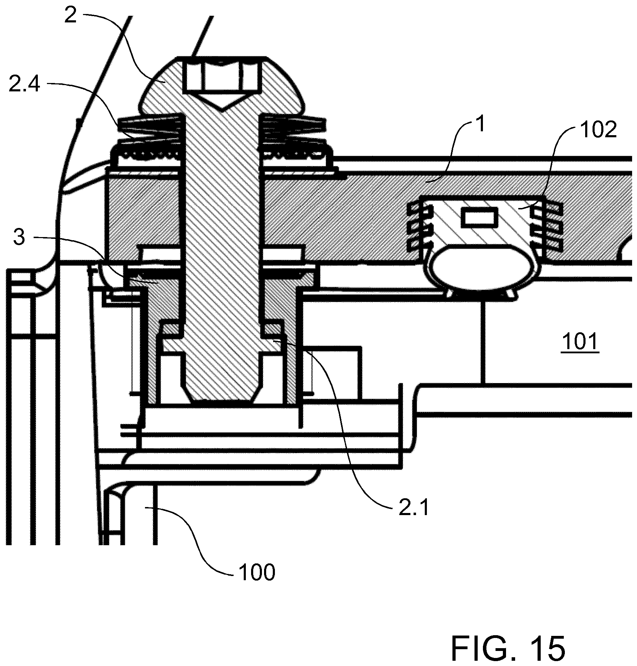

Die Figur 15 zeigt eine Schnittansicht eines Roboters 100 mit anmontierter Verschluss-Vorrichtung, die ausgeführt sein kann wie unter Bezugnahme auf die Figuren 1 bis 14 beschrieben. In Figur 15 sind der Übersichtlichkeit halber nicht alle Teile mit Bezugszeichen versehen.

Figur 15 zeigt neben der Verschluss-Vorrichtung mit insbesondere dem Abdeckelement 1, dem Verschlusselement 2 und der Verschlussbuchse 3 eine als Luftkammerdichtung ausgeführte Dichtung 102.

Das Abdeckelement 1 dient zur Abdeckung eines Hohlraums 101 des Roboters 101, z. B. eines Hohlraums 101 eines Robotergehäuses oder eines Roboterarms. Dadurch kann zweckmäßig eine Überdruckkapselung ausgebildet werden.

Die Dichtung 102 umfasst zwei Dichtlippen und ist zwischen dem Abdeckelement 1 und dem Roboter 100 angeordnet und verläuft in einer Nut im Abdeckelement 1. Die Dichtung 102 wird mittels der Befestigungseinrichtung 2, 3 gepresst (komprimiert), so dass der Hohlraum 101 trotz einem Überdruck von bis zu mindestens ca. 200 mbar dicht verschlossen ist und zumindest keine nennenswerte Leckage erfolgt.

Die Dichtung 102 hat von der Befestigungseinrichtung 2, 3 eine Distanz und ist gegenüber der Außenseite des Roboters 100 durch das Abdeckelement 1 abgeschirmt.

Die innere Dichtlippe ermöglicht, dass der Überdruck von bis zu 5 fachen des Spüldrucks in der Praxis mindestens 200 mbar nicht nach außen entweicht. Die äußere Dichtlippe schützt vor Eindringen von Schmutz, Flüssigkeit etc., obwohl hier schon das Abdeckelement 1 im Wesentlichen dicht am Roboter 100 (z. B. Gehäuse oder Roboterarm) anliegt. Die äußere Dichtlippe stellt somit zweckmäßig eine Redundanz dar und schützt zusätzlich vor einer Druckleckage.

Zu erwähnen ist, dass die Erfindung auch Ausführungsformen mit nur einer Nase 2.1, nur einer Steigungskonstruktion 3.1 und optional nur einer Zentrieröffnung 3.7 umfasst.

Zu erwähnen ist ferner, dass mittels der Verschluss-Vorrichtung vorteilhaft eine, mehrere oder sogar alle der folgenden Anforderungen erfüllt werden können:
A.Abdeckelement zumindest an einer Stelle nur mit einem Werkzeug zu öffnen,
B. Hohlraum / Überdruckkapselung (z. B. Gehäuse oder Arm des Roboters) druckdicht bis zu einem Überdruck von mindestens 200 mbar ohne nennenswerte Leckage,
C.Abdeckelement und Dichtungsqualität lebensdauerfest und/oder Dichtung über einen definierten Zeitraum alterungs-resistent, siehe z. B. NFPA 496
D.Bauteile, insbesondere Abdeckelement und Befestigungseinrichtung, müssen einer Fallprüfung mit einem definierten Prüfkörper aus 1 m standhalten, siehe z. B. ATEX-Richtlinie,
E. Dichtung lösemittelfest und zusätzlich von außen geschützt, so dass z. B. keine Farbreste die Dichtung erreichen und/oder verkleben,
F. Dichtung in einer Nut fixiert, jedoch einfach austauschbar,
G.Eindeutiger und definierter Verschluss- und Entriegelungsvorgang,
H.Entriegelung und Abnahme des Abdeckelements für eine schnelle Wartung unter 30 Sekunden durch eine einzige Person,
I.Reduzierung der Verschlüsse je Abdeckelement,
J.Öffnungs- und Schließbewegung für Abdeckelement mit einer Hand durchführbar,
K.Öffnungs- und/oder Schließzustand mit einer einzigen Hand-Umdrehung realisierbar, z. B. um maximal 215°, vorzugsweise um ca. 90°,
L.An der Stellung des Verschlusses optisch erkennbar, ob Verschluss offen oder geschlossen ist,
M.Verschlusselement und/oder Verschlussbuchse austauschbar, z. B. im Schadensfall,
N.Notentriegelung durch Hilfswerkzeug falls das Öffnungsmerkmal (z. B. Werkzeugeingriffsstruktur) durch falschen Gebrauch oder Verschleiß unbrauchbar ist.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen, wenn sie im Schutzbereich der Ansprüche fallen. Darüber hinaus beansprucht die Erfindung auch Schutz für den Gegenstand und die Merkmale der abhängigen Ansprüche

### Bezugszeichenliste

- 1: Abdeckelement
- 2: Befestigungseinrichtung, insbesondere Verschlusselement, z. B. Verschlussbolzen
- 2.1: Zumindest eine Nase
- 2.2: Erster Anlagering
- 2.3: Zweiter Anlagering
- 2.4: Beaufschlagungselement
- 3: Befestigungseinrichtung, insbesondere Verschlussbuchse
- 3.1: Zumindest eine Steigungs-/Rampenkonstruktion
- 3.2: Hoch- oder Wendepunkt
- 3.3: Teilbereich mit reduzierter oder negativer Steigung
- 3.4: Wendepunkt
- 3.5: Arretier-/Rastvertiefung
- 3.6: Anschlag
- 3.7: Zumindest eine Zentrieröffnung
- C: Schließ-Drehrichtung des Verschlusselements
- 100: Roboter, insbesondere Lackier- oder Beschichtungsroboter
- 101: Hohlraum, insbesondere Überdruckkapselung, z. B. eines Robotergehäuses oder Roboterarms
- 102: Dichtung, insbesondere elastische Kunststoffdichtung

## Patentansprüche

1. Beschichtungsroboter mit einem Hohlraum (101), der bis zu mindestens 175 mbar, 200 mbar oder 225 mbar überdruckdicht von einem demontierbaren Abdeckelement (1) verschließbar ist, und mit einer an dem Roboter (100) anbringbaren Verschluss-Vorrichtung, die zur Befestigung des Abdeckelements (1) an dem Roboter (100) eine Befestigungseinrichtung (2, 3) mit einem drehbaren Verschlusselement (2) umfasst,
**dadurch gekennzeichnet,**
**dass** die Befestigungseinrichtung (2, 3) eine Verschlussbuchse (3) zur abschnittsweisen Aufnahme und Befestigung des Verschlusselements (2) aufweist,
**dass** das Verschlusselement (2) zumindest eine von ihm abstehende, mit ihm drehbare Nase (2.1) aufweist, die zur Befestigung des Verschlusselements (2) in der Verschlussbuchse (3) dient,
und **dass** die Befestigungseinrichtung (2, 3) eine Dreh-Schließbewegung zwischen 45° und 215° aufweist und somit durch eine Dreh-Schließbewegung zwischen 45° und 215° in eine Verschlussstellung gebracht werden kann.

2. Beschichtungsroboter nach Anspruch 1, **dadurch gekennzeichnet, dass** die Befestigungseinrichtung (2, 3) eine Dreh-Schließbewegung zwischen 60° und 120°, vorzugsweise 80° und 100°, aufweist und somit durch eine Dreh-Schließbewegung zwischen 60° und 120°, vorzugsweise 80° und 100°, in eine Verschlussstellung gebracht werden kann.

3. Beschichtungsroboter nach Anspruch 1 oder 2, **dadurch gekennzeichnet, dass** die zumindest eine Nase (2.1) zur Vorzentrierung des Verschlusselements (2) in der Verschlussbuchse (3) der Befestigungseinrichtung (2, 3) dient.

4. Beschichtungsroboter nach einem der vorhergehenden Ansprüche, **dadurch gekennzeichnet, dass** das Verschlusselement (2) einen ersten Anlagering (2.2) und einen zweiten Anlagering (2.3) aufweist, zwischen denen das Abdeckelement (1) anordbar ist.

5. Beschichtungsroboter nach Anspruch 3, **dadurch gekennzeichnet, dass** die Verschlussbuchse (3) zumindest eine Steigungskonstruktion (3.1) für die zumindest eine Nase (2.1) aufweist, um einen Schließhub des Verschlusselements (2) zu erzeugen.

6. Beschichtungsroboter nach Anspruch 5, **dadurch gekennzeichnet, dass** die zumindest eine Steigungskonstruktion (3.1) zu einer Arretiervertiefung (3.5) zum Arretieren der zumindest einen Nase (2.1) führt und/oder ein Arretieren der zumindest einen Nase (2.1) in der Verschlussbuchse (3) durch Reibung erzielbar ist.

7. Beschichtungsroboter nach Anspruch 5 oder 6, **dadurch gekennzeichnet, dass** die zumindest eine Steigungskonstruktion (3.1) eine Steigung hin zu einem Hoch- oder Wendepunkt (3.2) aufweist, wobei die zumindest eine Steigungskonstruktion (3.1) in Schließ-Drehrichtung (C) des Verschlusselements (2) hinter dem Hoch- oder Wendepunkt (3.2) einen Teilabschnitt (3.3) mit reduzierter oder negativer Steigung aufweist.

8. Beschichtungsroboter nach einem der Ansprüche 5 bis 7, **dadurch gekennzeichnet, dass** die zumindest eine Steigungskonstruktion (3.1) zumindest eine Diskontinuität (3.2, 3.4) aufweist, welche beim Passieren der zumindest einen Nase (2.1) für eine Bedienperson haptisch spürbar ist, so dass der Bedienperson ein Erreichen der Verschlussstellung und/oder der Fortschritt eines Schließvorgangs während einer Drehung des Verschlusselements (2) haptisch spürbar vermittelbar ist.

9. Beschichtungsroboter nach Anspruch 8, **dadurch gekennzeichnet, dass** die zumindest eine Diskontinuität (3.2, 3.4) durch den Hoch- oder Wendepunkt (3.2) ausgebildet wird oder zumindest zwei Diskontinuitäten (3.2, 3.4) durch den Hoch- oder Wendepunkt (3.2) und einen zusätzlichen Wendepunkt (3.4) in Schließ-Drehrichtung (C) des Verschlusselements (2) hinter dem Teilabschnitt (3.3) und/oder in Schließ-Drehrichtung (C) des Verschlusselements (2) vor der Arretiervertiefung (3.5) ausgebildet werden.

10. Beschichtungsroboter nach einem der Ansprüche 3 bis 9, **dadurch gekennzeichnet, dass** für eine Bedienperson ein Erreichen der Verschlussstellung durch ein Einrasten der zumindest einen Nase (2.1) und/oder einen Anschlag (3.6) für die zumindest eine Nase (2.1) haptisch spürbar ist.

11. Beschichtungsroboter nach einem der Ansprüche 6 bis 10, **dadurch gekennzeichnet, dass** die Arretiervertiefung (3.5) in Schließ-Drehrichtung (C) des Verschlusselements (2) hinter dem Hoch- oder Wendepunkt (3.2), hinter dem Teilabschnitt (3.3) und/oder hinter dem zusätzlichen Wendepunkt (3.4) ausgebildet ist.

12. Beschichtungsroboter nach einem der Ansprüche 3 bis 11, **dadurch gekennzeichnet, dass** die Verschlussbuchse (3) zumindest einen Anschlag (3.6) für die zumindest eine Nase (2.1) aufweist, zur Begrenzung der Schließ-Drehbewegung des Verschlusselements (2).

13. Beschichtungsroboter nach einem der Ansprüche 3 bis 12, **dadurch gekennzeichnet, dass** die Verschlussbuchse (3) zumindest eine Zentrieröffnung (3.7) für die zumindest eine Nase (2.1) umfasst, zur Vorzentrierung des Verschlusselements (2) .

14. Beschichtungsroboter nach einem der vorhergehenden Ansprüche, **dadurch gekennzeichnet, dass** die Befestigungseinrichtung (2, 3) ein Beaufschlagungselement (2.4) zur Erzeugung einer Kraft in Richtung des Abdeckelements (1) aufweist und vorzugsweise das Beaufschlagungselement (2.4) als Schließkraftverstärker sowie als Hubausgleichsfunktion bei erzeugter Kraft wirkt.

15. Beschichtungsroboter nach Anspruch 14, **dadurch gekennzeichnet, dass** das Beaufschlagungselement (2.4) zumindest eines von folgenden umfasst:
- eine Feder,
- eine Spiralfeder,
- eine Tellerfeder,
- ein elastisch verformbares Kunststoffbauteil.

16. Beschichtungsroboter nach einem der vorhergehenden Ansprüche, **gekennzeichnet durch** zumindest eines der folgenden Merkmale:
- zwei Nasen (2.1),
- zwei Steigungskonstruktionen (3.1),
- zwei Zentrieröffnungen (3.6).

17. Beschichtungsroboter nach einem der vorhergehenden Ansprüche, **dadurch gekennzeichnet, dass** die Verschluss-Vorrichtung eine Dichtung (102) zur Anordnung zwischen dem Abdeckelement (1) und dem Roboter (100) umfasst und die Dichtung (102) mittels der Befestigungseinrichtung (2, 3) pressbar und/oder elastisch verformbar ist.

18. Beschichtungsroboter nach Anspruch 17, **dadurch gekennzeichnet, dass** die Dichtung (102) eine Luftkammerdichtung ist, zumindest eine Dichtlippe aufweist und/oder in einer Nut verläuft.

19. Beschichtungsroboter nach Anspruch 17 oder 18, **dadurch gekennzeichnet, dass** die Dichtung (102) von der Befestigungseinrichtung (2, 3) eine Distanz für eine ausreichende Dichtungsgauflage aufweist und gegenüber der Außenseite des Roboters (100) durch das Abdeckelement (1) abgeschirmt ist.

20. Beschichtungsroboter nach einem der vorhergehenden Ansprüche, **dadurch gekennzeichnet, dass** zur Erzielung der Verschlussstellung das Verschlusselement (2) und/oder die Verschlussbuchse (3) gewindefrei ausgeführt ist.

21. Beschichtungsroboter nach einem der vorhergehenden Ansprüche, **dadurch gekennzeichnet, dass** das Verschlusselement (2) einen Kopfabschnitt mit einer Werkzeugeingriffsstruktur aufweist und einen Schaftabschnitt, wobei zumindest eine Nase (2) von dem Schaftabschnitt absteht, der erste Anlagering und der zweite Anlagering um den Schaftabschnitt herum angeordnet sind, und/oder das Beaufschlagungselement (2.4) um den Schaftabschnitt herum angeordnet ist.

22. Beschichtungsroboter nach einem der vorhergehenden Ansprüche, **dadurch gekennzeichnet, dass** die Befestigungseinrichtung (2, 3) einen Indikator aufweist, an dessen Stellung optisch erkennbar ist, ob die Befestigungseinrichtung (2, 3) in Verschlussstellung ist oder nicht.

## Claims

1. Coating robot with a cavity (101) which can be closed in a pressure-tight manner up to at least 175 mbar, 200 mbar or 225 mbar by a removable covering element (1), and with a closure device which can be attached to the robot (100) and which comprises a fastening apparatus (2, 3) with a rotatable closure element (2) for fastening the covering element (1) to the robot (100), **characterized in**
**that** the fastening apparatus (2, 3) comprises a closure bushing (3) for receiving and fastening the closure element (2) in sections,
**that** the closure element (2) has at least one nose (2.1) projecting from it and rotatable with it, which serves to fasten the closure element (2) in the closure bushing (3),
and in that the fastening apparatus (2, 3) has a rotary closing movement of between 45° and 215° and can thus be brought into a closed position by a rotary closing movement of between 45° and 215°.

2. Coating robot according to claim 1, **characterized in that** the fastening apparatus (2, 3) has a rotary closing movement between 60° and 120°, preferably 80° and 100°, and can thus be brought into a closed position by a rotary closing movement between 60° and 120°, preferably 80° and 100°.

3. Coating robot according to claim 1 or 2, **characterized in that** the at least one nose (2.1) serves to pre-centre the closure element (2) in the closure bushing (3) of the fastening apparatus (2, 3).

4. Coating robot according to one of the preceding claims, **characterized in that** the closure element (2) has a first abutment ring (2.2) and a second abutment ring (2.3), between which the covering element (1) can be arranged.

5. Coating robot according to claim 3, **characterized in that** the closure bushing (3) comprises at least one pitch structure (3.1) for the at least one nose (2.1) in order to generate a closing stroke of the closure element (2).

6. Coating robot according to claim 5, **characterized in that** the at least one pitch structure (3.1) leads to a locking recess (3.5) for locking the at least one nose (2.1) and/or locking of the at least one nose (2.1) in the closure bushing (3) can be achieved by friction.

7. Coating robot according to claim 5 or 6, **characterized in that** the at least one pitch structure (3.1) has a pitch towards a high or turning point (3.2), the at least one pitch structure (3.1) having a partial section (3.3) with a reduced or negative pitch in the closing direction of rotation (C) of the closure element (2) behind the high or turning point (3.2).

8. Coating robot according to one of claims 5 to 7, **characterized in that** the at least one pitch structure (3.1) has at least one discontinuity (3.2, 3.4), which is haptically perceptible to an operator when passing the at least one nose (2.1), so that the operator can haptically perceptibly be informed that the closure position has been reached and/or the progress of a closing process during a rotation of the closure element (2).

9. Coating robot according to claim 8, **characterized in that** the at least one discontinuity (3.2, 3.4) is formed by the high or turning point (3.2) or at least two discontinuities (3.2, 3.4) are formed by the high or turning point (3. 2) and an additional turning point (3.4) in the closing direction of rotation (C) of the closure element (2) behind the partial section (3.3) and/or in the closing direction of rotation (C) of the closure element (2) in front of the locking recess (3.5).

10. Coating robot according to one of claims 3 to 9, **characterized in that** an operator can feel the locking position being reached by a latching of the at least one nose (2.1) and/or a stop (3.6) for the at least one nose (2.1).

11. Coating robot according to one of claims 6 to 10, **characterized in that** the locking recess (3.5) is formed behind the high or turning point (3.2), behind the partial section (3.3) and/or behind the additional turning point (3.4) in the closing direction of rotation (C) of the closure element (2).

12. Coating robot according to one of claims 3 to 11, **characterized in that** the closure bushing (3) comprises at least one stop (3.6) for the at least one nose (2.1), for limiting the closing rotary movement of the closure element (2).

13. Coating robot according to one of claims 3 to 12, **characterized in that** the closure bushing (3) comprises at least one centering opening (3.7) for the at least one nose (2.1), for pre-centering the closure element (2).

14. Coating robot according to one of the preceding claims, **characterized in that** the fastening apparatus (2, 3) has a loading element (2.4) for generating a force in the direction of the covering element (1) and preferably the loading element (2.4) acts as a closing force amplifier and as a stroke compensation function when a force is generated.

15. Coating robot according to claim 14, **characterized in that** the loading element (2.4) comprises at least one of the following:
- a spring,
- a coil spring,
- a disk spring,
- an elastically deformable plastic component.

16. Coating robot according to one of the preceding claims, **characterized by** at least one of the following features:
- two noses (2.1),
- two pitch structures (3.1),
- two centering openings (3.6).

17. Coating robot according to one of the preceding claims, **characterized in that** the sealing device comprises a seal (102) for arrangement between the covering element (1) and the robot (100) and the seal (102) can be pressed and/or elastically deformed by means of the fastening apparatus (2, 3).

18. Coating robot according to claim 17, **characterized in that** the seal (102) is an air chamber seal, has at least one sealing lip and/or runs in a groove.

19. Coating robot according to claim 17 or 18, **characterized in that** the seal (102) has a distance from the fastening apparatus (2, 3) for a sufficient sealing gap and is shielded from the outside of the robot (100) by the covering element (1).

20. Coating robot according to one of the preceding claims, **characterized in that**, in order to achieve the sealing position, the sealing element (2) and/or the sealing bush (3) is designed to be threadless.

21. Coating robot according to one of the preceding claims, **characterized in that** the fastening element (2) has a head portion with a tool-engaging structure and a shank portion, at least one nose (2) projecting from the shank portion, the first abutment ring and the second abutment ring being arranged around the shank portion, and/or the loading element (2.4) being arranged around the shank portion.

22. Coating robot according to one of the preceding claims, **characterized in that** the fastening apparatus (2, 3) has an indicator, by the position of which it is optically recognizable whether the fastening apparatus (2, 3) is in the closed position or not.

## Revendications

1. Robot de revêtement avec une cavité (101) qui peut être obturée de manière étanche à des surpressions de 175 mbar, 200 mbar ou 225 mbar par un élément de recouvrement démontable (1), et avec un dispositif de fermeture pouvant être monté sur le robot (100), qui comprend, pour la fixation de l'élément de recouvrement (1) au robot (100), un dispositif de fixation (2, 3) avec un élément de fermeture rotatif (2),
**caractérisé en ce que**
le dispositif de fixation (2, 3) comprend une douille de fermeture (3) pour le logement partiel et la fixation de l'élément de fermeture (2),
l'élément de fermeture (2) comprend au moins un embout (2.1), qui s'étend à partir de celui-ci et qui peut tourner avec celui-ci, qui permet la fixation de l'élément de fermeture (2) dans la douille de fermeture (3),
et le dispositif de fixation (2, 3) présente un mouvement de fermeture rotatif entre 45° et 215° et peut donc être mis dans une position de fermeture par un mouvement de fermeture rotatif entre 45° et 215°.

2. Robot de revêtement selon la revendication 1, **caractérisé en ce que** le dispositif de fixation (2, 3) présente un mouvement de fermeture rotatif entre 60° et 120°, de préférence entre 80° et 100°, et peut donc être mis dans une position de fermeture par un mouvement de fermeture rotatif entre 60° et 120°, de préférence entre 80° et 100°.

3. Robot de revêtement selon la revendication 1 ou 2, **caractérisé en ce que** l'au moins un embout (2.1) permet de pré-centrer l'élément de fermeture (2) dans la douille de fermeture (3) du dispositif de fixation (2, 3).

4. Robot de revêtement selon l'une des revendications précédentes, **caractérisé en ce que** l'élément de fermeture (2) comprend une première bague d'appui (2.2) et une deuxième bague d'appui (2.3), entre lesquelles l'élément de recouvrement (1) peut être disposé.

5. Robot de revêtement selon la revendication 3, **caractérisé en ce que** la douille de fermeture (3) présente au moins une structure en pente (3.1) pour l'au moins un embout (2.1), afin d'obtenir une course de fermeture de l'élément de fermeture (2).

6. Robot de revêtement selon la revendication 5, **caractérisé en ce que** l'au moins une structure en pente (3.1) conduit à un renfoncement d'arrêt (3.5) pour l'arrêt de l'au moins un embout (2.1) et/ou l'arrêt de l'au moins un embout (2.1) dans la douille de fermeture (3) par friction.

7. Robot de revêtement selon la revendication 5 ou 6, **caractérisé en ce que** l'au moins une structure en pente (3.1) présente une pente en direction d'un point supérieur ou d'inflexion (3.2), dans lequel l'au moins une structure en pente (3.1) présente, dans la direction de fermeture (C) de l'élément de fermeture (2), derrière le point supérieur ou d'inflexion (3.2), une portion (3.3) avec une pente réduite ou négative.

8. Robot de revêtement selon l'une des revendications 5 à 7, **caractérisé en ce que** l'au moins une structure en pente (3.1) présente au moins une discontinuité (3.2, 3.4) qui est perceptible de manière haptique par un opérateur lors du passage de l'au moins un embout (2.1), de sorte que l'arrivée à la position de fermeture et/ou la progression d'un processus de fermeture pendant une rotation de l'élément de fermeture (2) peut être transmise de façon à être perceptible de manière haptique par l'opérateur.

9. Robot de revêtement selon la revendication 8, **caractérisé en ce que** l'au moins une discontinuité (3.2, 3.4) est réalisée à l'aide du point supérieur ou d'inflexion (3.2) ou au moins deux discontinuités (3.2, 3.4) sont réalisées à l'aide du point supérieur ou d'inflexion (3.2) et d'un point d'inflexion supplémentaire (3.4) dans la direction de rotation de fermeture (C) de l'élément de fermeture (2) derrière la portion (3.3) et/ou dans la direction de rotation de fermeture (C) de l'élément de fermeture (2) avant le renfoncement d'arrêt (3.5).

10. Robot de revêtement selon l'une des revendications 3 à 9, **caractérisé en ce que**, pour un opérateur, l'arrivée à la position de fermeture est perceptible de manière haptique grâce à un encliquetage de l'au moins un embout (2.1) et/ou une butée (3.6) pour l'au moins un embout (2.1).

11. Robot de revêtement selon l'une des revendications 6 à 10, **caractérisé en ce que** le renfoncement d'arrêt (3.5) est réalisé, dans la direction de rotation de fermeture (C) de l'élément de fermeture (2), derrière le point supérieur ou d'inflexion (3.2), derrière la portion (3.3) et/ou derrière le point d'inflexion supplémentaire (3.4).

12. Robot de revêtement selon l'une des revendications 3 à 11, **caractérisé en ce que** la douille de fermeture (3) comprend au moins une butée (3.6) pour l'au moins un embout (2.1), afin de limiter le mouvement de rotation de fermeture de l'élément de fermeture (2).

13. Robot de revêtement selon l'une des revendications 3 à 12, **caractérisé en ce que** la douille de fermeture (3) comprend au moins une ouverture de centrage (3.7) pour l'au moins un embout (2.1), pour le pré-centrage de l'élément de fermeture (2).

14. Robot de revêtement selon l'une des revendications précédentes, **caractérisé en ce que** le dispositif de fixation (2, 3) comprend un élément de sollicitation (2.4) pour la production d'une force en direction de l'élément de recouvrement (1) et de préférence l'élément de sollicitation (2.4) agit comme un amplificateur de force de fermeture ainsi que comme un élément de compensation de course lors de l'application d'une force.

15. Robot de revêtement selon la revendication 14, **caractérisé en ce que** l'élément de sollicitation (2.4) comprend au moins un des éléments suivants :
- un ressort,
- un ressort hélicoïdal,
- un ressort à lames,
- une pièce en matière plastique déformable élastiquement.

16. Robot de revêtement selon l'une des revendications précédentes, **caractérisé par** au moins une des caractéristiques suivantes :
- deux embouts (2.1),
- deux structures en pente (3.1),
- deux ouvertures de centrage (3.6).

17. Robot de revêtement selon l'une des revendications précédentes, **caractérisé en ce que** le dispositif de fermeture comprend un joint d'étanchéité (102) destiné à être disposé entre l'élément de recouvrement (1) et le robot (100) et le joint d'étanchéité (102) peut être comprimé et/ou déformé élastiquement au moyen du dispositif de fixation (2, 3).

18. Robot de revêtement selon la revendication 17, **caractérisé en ce que** le joint d'étanchéité (102) est un joint d'étanchéité à chambre à air, comprend une lèvre d'étanchéité et/ou s'étend dans une rainure.

19. Robot de revêtement selon la revendication 17 ou 18, **caractérisé en ce que** le joint d'étanchéité (102) présente, par rapport au dispositif de fixation (2, 3), une distance pour un appui suffisant du joint d'étanchéité et est isolé par rapport au côté externe du robot (100) par l'élément de recouvrement (1).

20. Robot de revêtement selon l'une des revendications précédentes, **caractérisé en ce que**, afin d'obtenir la position de fermeture, l'élément de fermeture (2) et/ou la douille de fermeture (3) sont réalisés sans filetage.

21. Robot de revêtement selon l'une des revendications précédentes, **caractérisé en ce que** l'élément de fermeture (2) comprend une portion de tête avec une structure d'emboîtement d'outil et une portion de tige, dans lequel au moins un embout (2) part de la portion de tige, la première bague d'appui et la deuxième bague d'appui sont disposées autour de la portion de tige et/ou l'élément de sollicitation (2.4) est disposé autour de la portion de tige.

22. Robot de revêtement selon l'une des revendications précédentes, **caractérisé en ce que** le dispositif de fixation (2, 3) comprend un indicateur grâce à la position duquel il peut être détecté optiquement si le dispositif de fixation (2, 3) est dans la position de fermeture ou non.
